# EUROPEAN PATENT SPECIFICATION

(11) **EP 1 464 483 B1**
(45) Date of publication and mention of the grant of the patent: **19.09.2007**
(21) Application number: 04251862.1
(22) Date of filing: 29.03.2004
(51) Int. Cl.: B32B 27/20, B32B 27/42, B32B 37/14

(54) **A pigmented panel assembly**
Ein pigmentierter Plattenaufbau
Un assemblage de panneaux pigmentés

(30) Priority: 02.04.2003 GB 0307697
(43) Date of publication of application: 06.10.2004
(73) Proprietor: Hexcel Composites Limited, Cambridge CB2 4QD (GB)
(72) Inventor: BLAIR, Dana, Cambridge CB3 7XU (GB); CONROY, Paul, Cambridge CB1 2PW (GB); MACKENZIE, Paul, Surrey CR8 4J8 (GB)
(74) Representative: Wilson Gunn

(56) References cited:
- WO-A-03/061964
- GB-A- 1 387 692
- US-A- 4 880 681
- ANONYMOUS: INTERNET ARTICLE, [Online] June 1997 (1997-06), XP002284170 Retrieved from the Internet: URL:http://www.dupont.com/tedlar/techdata/ pdf/h66363.pdf> [retrieved on 2004-06-11]

## Description

The present invention relates to a pigmented panel assembly.

Honeycomb sandwich panels have been used for many years as interior structural components of aircraft, trains and boats. Due to the need for low levels of fire, smoke and toxic emissions in the event of a fire situation, phenolic resin matrices embedded in a reinforcement fibre are typically used as the panel skin material. Examples of this approach are described in US 4880681, US 5714419 and WO 92/17331.

In order to provide aesthetic appeal to these panels it is customary to apply a top layer of decorative material such as Tedlar® polyvinyl fluoride film to the outer surface of the panel. These decorative sheets may be patterned as in an aircraft cabin or plain coloured as in aircraft luggage holds, galleys and other enclosures and compartments. Current methods of applying the top layer to the panel have a limited process temperature interval due to the nature of the adhesive used to bond the decorative material to the panel's outer surface. This can restrict processing to temperatures of 90 to 130°C depending upon the adhesive used. Since the resin matrix of the panel is typically cured at a temperature from 140°C to 160°C two separate curing steps are required. This is regarded as a disadvantage as it increases processing times and costs.

Attempts have been made to address this problem. For example, US 4599212 discloses a reinforced phenolic laminate panel having a finishing coat of a butylated phenol-formaldehyde resin in which the finishing coat can be mass-pigmented to the desired colour. However, in this context mass-pigmented means homogeneously pigmented throughout the whole body of the laminate panel.

JP 2000071365 discloses a method of producing a decorative sheet by successively providing a base material layer, an expanded thermoplastic resin layer containing blowing agents and a coloured thermoplastic resin layer containing titanium dioxide such that the top layer shields the yellowing of the expanded foam layer caused by the blowing agents. However, JP 2000071365 does not address fibre reinforced thermoset resin layers.

Pigmented gel coats are known in the composites molding industry but these are pre-applied to the mold surface either by painting or spraying. Furthermore, gel coats are mixtures of resin and curing agents that are of a different formulation from, but capable of being co-cured with, the resin matrix. Scrim-based gel coats are also known but these also need to be pre-applied to the mold and contain a high level of resin loading. A disadvantage with gel coats is that they have to be cured in the mold as the first stage of the lay-up and curing process.

Attempts have been made to incorporate titanium dioxide directly into a fibre reinforced phenolic resin matrix, but even with loadings as high as 50%, the desired colour intensity was not achieved. In addition, structural integrity such as prepreg to core adhesion deteriorated.

Therefore, it is an object of the present invention to provide a pigmented panel assembly that can be cured at a higher temperature such that a single curing step is sufficient.

According to the first aspect present invention there is provided a pigmented panel assembly comprising a core, at least one prepreg layer and at least one top coat layer, wherein the aforesaid prepreg layer is located between the core and the top coat layer and wherein the said top coat layer comprises at least one pigment and at least one thermoplastic resin binder, characterised in that said prepreg comprises a phenolic resin matrix and said resin binder comprises polyvinyl butyral, the panel assembly being cured in a single curing process.

According to the second aspect of the present invention there is provided a method for the manufacture of a pigmented panel assembly comprising the steps of:- applying at least one prepreg layer to a core, applying at least one top coat layer to the aforesaid prepreg layer such that the said prepreg layer is located between the core and the top coat layer and wherein the said top coat layer comprises at least one pigment and at least one thermoplastic resin binder, characterised in that the prepreg comprises a phenolic resin matrix and said resin binder comprises polyvinyl butyral, and the panel assembly is cured in a single curing process.

Advantageously, the pigmented top coat layer and the prepreg layer are such that they can be co-cured in a single curing step, thereby increasing the process efficiency of the manufacture of pigmented panel assemblies.

A further advantage of the present invention is that the pigmented top coat layer does not contain any matrix resin nor does it penetrate into the lower prepreg layers during curing thus maintaining the desired colour intensity. There are several methods of determining colour level including ASTM D2457-90 which is a test method for specular gloss and ANS AATCC, a measure of colourfastness. It was found that use of a hand-held spectrophotometer such as an X-Rite SP-60 was a convenient tool to measure laminate colours. A D65 illuminant can be used to mimic sunlight and measurement in specular exclusive or inexclusive mode.

A still further advantage of the present invention is that during curing the top coat layer chemically bonds with the prepreg layer to which it is applied thereby eliminating the need for additional adhesive materials as is the case with prior art systems.

The panel assembly of the present invention is preferably cured at a temperature upto 160°C.

The core of the present invention may comprise flame retardant foams, honeycomb or even balsa. Preferably, the core comprises a non-metallic honeycomb, although metallic honeycombs may also be used.

The core most preferably comprises non-metallic honeycombs based on Nomex^{®} or calendered kraft paper such as that described in EP 0967070 A1. Typical honeycombs range from 29 to 89 kgm⁻³ in density and have cell sizes from 3 to 5 mm. The honeycomb may also be over-expanded for use in highly contoured parts. Ideal honeycombs are A1-48-3 and A1-80-3 available from Hexcel Composites Ltd., Duxford, UK.

The panel assembly of the present invention preferably comprises at least two prepreg layers. The prepreg layers may be applied to opposite sides of the core such that each side of the core has at least one prepreg layer applied thereto or the prepreg layers may be applied to the same side of the core such that a second prepreg layer is applied to the surface of a first prepreg layer.

The prepreg of the present invention preferably comprises a thermoset phenolic resin matrix together with a reinforcement material.

The phenolic resin matrix of the present invention is chosen such that it is able to provide the necessary FST properties. Suitable resin matrices which can be used alone or in combination are based on phenolic resole, or phenolic novalac.

Preferably the resin matrices of the present invention which can be used alone or in combination include any of: HexPly^{®} HT 93, HexPly^{®} M25, HexPly^{®} M26 and HexPly^{®} M41 available from Hexcel Corporation.

The reinforcement of the present invention may be made from synthetic or natural fibres which may be of a unidirectional or fabric construction, but are preferably of fabric construction.

Suitable fabrics which can be used alone or in combination include any of the following textile forms: plain, twill and satin weave carbon fabrics. Preferably, the fabric textile form is a satin weave glass fabric having a weight ranging from 105 gm⁻² (style 120) and 295 - 303 gm⁻² (style 7781).

In some circumstances, non-woven materials such as random fibre-oriented mats or veils may also be used. These materials can be beneficial for more contoured panels where good drape is required in the moulding tool.

The prepreg of the present invention is prepared by techniques well known to those skilled in the art. The preferred method involves solution impregnation of the reinforcement followed by solvent removal in a vertical oven.

The pigment(s) of the topcoat layer is chosen out of consideration for the desired colour. Furthermore, any colour combination is feasible such that the desired colour is afforded. For many applications light colours are desirable and in particular white which is achieved by way of rutile titanium dioxide. There are many suitable grades of titanium dioxide with Kemura TiO₂, Tronox RDDI or Tioxide TR81 being particularly suitable as they also give improved resistance to UV degradation. These are available from Kemira Pigments, Helsinki, Finland and Huntsman Tioxide, Calais, France, respectively.

The pigment preferably constitutes from 10% to 40% by weight of the topcoat layer and more preferably from 20% to 35% by weight of the topcoat layer.

Preferably the resin binder of the topcoat layer is thermoplastic, its choice being limited solely by its compatibility with the resin matrix of the prepreg layer(s). Furthermore, the resin binder must be capable of forming a film, a property it gives to the topcoat layer.

Typically, the resin binder constitutes from 40 to 70% by weight of the topcoat layer.

As the resin matrix of the prepreg is a phenolic resin matrix, polyvinyl butyral has been found to be a particularly suitable resin binder. In this case, the preferred resin binder is Butvar^{®} B90 available from Solutia Inc., St. Louis, Missouri.

Additional ingredients may optionally be added to the topcoat layer, these include but are not limited to performance enhancers or modifiers such as in-situ fire barriers or flame retardants, for example Ceepree^{®} CGB6-220M from Ceepree Products Ltd, Southport, UK or ammonium polyphosphate such as the Exolit^{®} AP 400 series from Clariant AG, Basel, Switzerland; smoke suppressants (Firebrake^{®} ZB from Omya UK Ltd., Dorking England or Magnafin^{®} from Martinswerk GmbH, Cologne, England); viscosity control agents i.e. thioxotropes, for example Cabosil^{®} from Cabot Corp., Tuscola, Illinois ; and chopped E Glass fibres from Vetrotex UK Limited, Wallingford, England The chopped fibres contribute to minimising print-through in the cured panel of the textile pattern from the underlying phenolic prepreg.

The pigmented topcoat layer may be prepared as a paste by dissolving the resin binder in a suitable solvent, for example industrial methylated spirit (IMS) and adding to this the required amount of pigment. Alternatively a water emulsion of resin binder can be prepared and the pigment dispersed therein as desired.

Preferably the topcoat layer is applied to the prepreg layer(s) before lay-up via a suitable substrate. The paste material described above is applied to the substrate using standard coating techniques such as blade coating, reverse roll coating, forward roll coating, solution dipping and film extrusion. Alternatively, the paste may be applied to the substrate such that the paste impregnates the substrate. The coated or impregnated substrate is then passed through an oven to remove the solvent and wound onto a roll. If desired, an interleaf material such as release paper or polyethylene film can also be incorporated. The substrate may be a textile, a random fibre mat, a thermoplastic film or a release paper.

Where the substrate is a thermoplastic film it is preferable that it has a melting point greater than 160°C and more preferably greater than 200°C. Suitable thermoplastic film substrates include polyethylene terephthalate (PET), particularly suitable grades including PET-W-50-S20, PET-N-36-S30, PET-N-50-S40 and PET-N-36-S10 ideally having a thickness between 36 and 50µm. These films are available from API Coated Products Ltd., Cheltenham, UK. The use of a PET film can improve the quality of the surface finish due to the superior quality of surface of the PET film over the steel surface of the press platens.

The selection of the appropriate textile substrate is dependent upon the finished panel assembly construction requirements. In some instances the textile only needs to support the topcoat layer i.e. the resin binder and the pigment, and can therefore be of lighter weight, whereas other instances may require some structural contribution from the textile, in which case heavier weights will be required.

Suitable textile substrates preferably have areal weight below 150gm⁻². For example, plain weave glass fabric having an areal weight of 20gm⁻² (style 104), 4- harness stain weave glass having an areal weight of 105gm⁻² (style 120), both of which are available from Hexcel Fabrics S.A. Villeurbanne, France. Further examples of suitable textile substrates include, but are not limited to warp knitted nylon 6 carrier at 10gm⁻² (style A1050), plain weave nylon 6.6 carrier at 22gm⁻² (style K4590), reed and pick cotton scrim cloth at 13 to 23gm⁻² and polyester or glass mats such as 6gm⁻² (T2178/09 polyester mat from Technical Fibre Products, Kendal, UK).

The finished topcoat layer i.e. the substrate, the resin binder and the pigment preferably have a weight range from 20 to 170gm⁻² and more preferably from 40 to 150gm⁻².

Where the pigmented topcoat material is coated or impregnated onto a substrate, the topcoat layer is applied by lamination of the substrate onto the prepreg layers as the last stage of the production process. Alternatively, the topcoat material may be applied to the core and prepreg assembly during the final stage of lay-up prior to curing.

Where the pigmented topcoat is not coated or impregnated onto a substrate, the paste material may be sprayed directly onto the prepregs layer(s).

Advantageously, the panel assemblies of the present invention, once cured, have excellent FST properties.

The panel assemblies of the present invention, once cured, have been shown to have an OSU value, which relates to the heat release of the panel, of less than or equal to 32.5 (table 1), an average burn length of about 77mm (table 2), and a smoke density of about 5 or less (table 3).

The present invention will now be described further by way of example only and with reference to the following drawings in which:-
Fig. 1 shows a section through a panel assembly in accordance with the prior art;
Fig. 2 shows a section through one embodiment of the present invention;
Fig. 3 shows a section through a second embodiment of the present invention;
Fig. 4 shows a section through a third embodiment of the present invention; and
Fig. 5 shows a section through a fourth embodiment of the present invention.

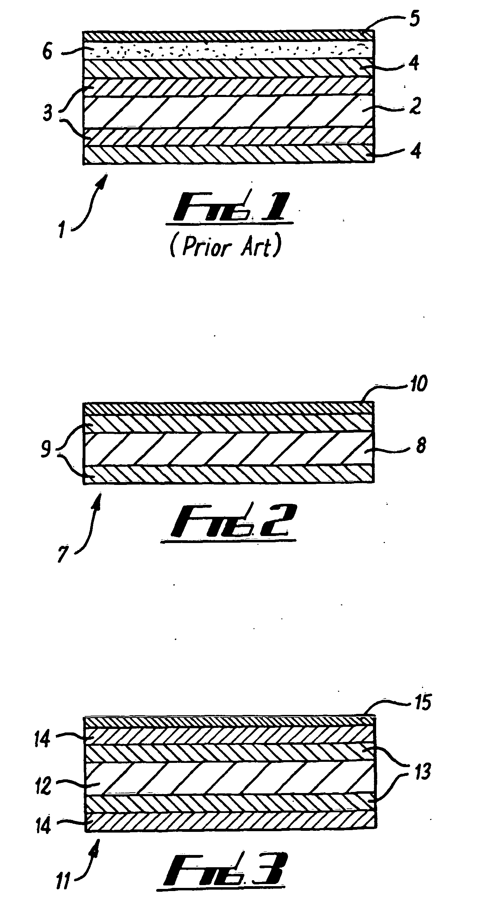

A typical prior art panel assembly is shown in Fig. 1. The panel assembly 1 comprises a Nomex^{®} A1-48-3 core 2 having a single layer of an M41 phenolic matrix and 7781 glass reinforced prepreg 3 applied to both of its outer surfaces and a second layer 4 of the said prepreg applied to the first layer thereby providing a 2 ply prepreg system. The core 1 and the prepreg 3 and 4 may be cured either by a crush core process of hot loading and curing at 140°C for 7 minutes under sufficient pressure to crush the panel assembly to the required thickness (typically 60 to 70 Bar pressure to the press platens) or an open press process of cold loading and curing at 135°C for 30 minutes at 0.9 to 4.0 Bar pressure. A decorative topcoat layer 5 is then applied to the outer surface of the second prepreg layer by way of an adhesive 6. The adhesive 6 is then cured in a second bonding step at 90°C and 3 Bar pressure.

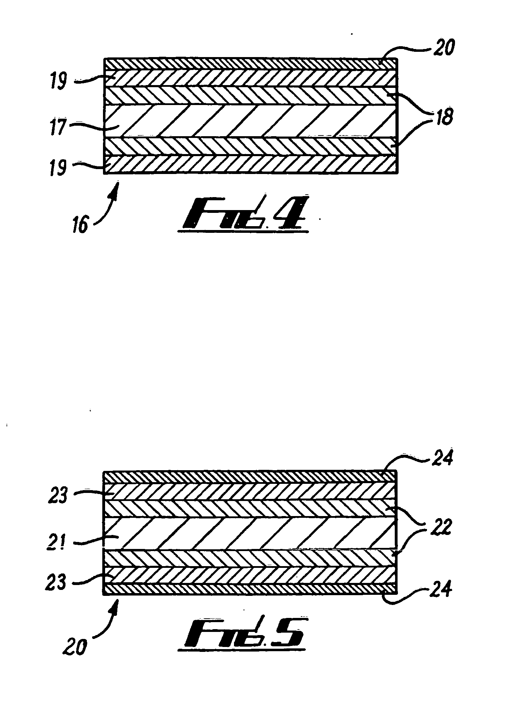

Fig. 2 shows a section through one embodiment of a panel assembly 7 according to the present invention having a honeycomb Nomex^{®} A1-48-3, wherein both of its outer surfaces has a single layer of an M41 phenolic matrix and 120 glass reinforced prepreg 9 A topcoat layer 10 comprising titanium dioxide pigmented Butvar on a 120 glass substrate is applied to the outer surface of the said 120 glass reinforced prepreg 9. The panel assembly 7 is then cured by way of a crush core process, wherein the panel assembly is hot loaded and cured at 140°C for 7 minutes under sufficient pressure to crush the panel assembly to the required thickness (typically 60 to 70 Bar pressure to the press platens).

Fig. 3 shows a section through a second embodiment of a panel assembly 11 according to the present invention having a honeycomb Nomex^{®} A1-48-3 core 12 wherein two layers of an M41 phenolic matrix and 7781 glass reinforced prepreg 13 and 14are applied to each outer surface of the core. A topcoat layer 15 comprising titanium dioxide Butvar^{®} on a PET film substrate is applied to one of the outer surfaces of the prepreg. The panel assembly 11 is then cured by way of a crush core process, wherein the panel assembly 11 is hot loaded and cured at 140°C for 7 minutes under sufficient pressure to crush the panel assembly 11 to the required thickness (typically 60 to 70 Bar pressure to the press platens).

Fig. 4 shows a section through a third embodiment of a panel assembly 16 according to the present invention having a honeycomb Nomex^{®} A1-48-3 core 17, wherein two layers of an M41 phenolic matrix and 7781 glass reinforced prepreg 18 and 19 are applied to each of the cores outer surfaces. A topcoat layer 20 comprising titanium dioxide pigmented Butvar^{®} on a polyester matt substrate is applied to one of the outer surfaces of the 2 layer prepreg. The panel assembly 16 is then cured by way of a platten press. The panel assembly 16 is cold loaded and cured at 135°C for 30 minutes at 0.9 to 4.0 Bar pressure.

Fig. 5 shows a section through a fourth embodiment of a panel assembly 20 according to the present invention having a honeycomb Nomex^{®} A1-48-3 core 21, wherein two layers of an HT93 phenolic matrix and 7781 glass substrate prepreg 22 and 23 are applied to each of the cores outer surfaces. A topcoat layer 24 comprising titanium dioxide pigmented Butvar^{®} on a PET film substrate is applied to each outer surface of both the prepreg layers. The panel assembly 20 is then cured by way of a platten press, wherein the panel assembly 20 is cold loaded and cured at 135°C for 90 minutes at 3 Bar pressure.
The following example further illustrates the present invention:-

### Example 1

An example of a pigmented topcoat layer composition.

| **Material** | **% by weight included** |
|---|---|
| Polyvinyl Butyral | 40-70 |
| Titanium Dioxide | 15-40 |
| Fumed Silica | 0.1-2.0 |
| Fire Barrier and/or Flame Retardant | 5-20 |

Smoke suppressants may also be incorporated as an additional ingredient relative to the above components in an amount ranging form 0-10% by weight of the topcoat layer.
NB: These materials are dispersed into an 4:1 IMS:MEK solvent blend with a solids range of 20 to 30% according to the following process:
Example 1 is prepared in the following manner:
1. Mixing vessel is charged with IMS
2. Polyvinyl Butyral is added with stirring, the mixture is stirred until it has completely dissolved
3. TiO₂ pigment is added with high speed sheer, mixed until dispersed and the particle size is below 5µm. Particle size reduction can also be achieved via triple roll milling if necessary. A Hegman gauge or similar instrument is used to determine the particle size.
4. Fire barrier and/or flame retardant is added with high speed shear.
5. Fumed silica is added with high speed mixing, and the mixture is mixed until the silica is dispersed. Additional ingredients such as smoke suppressants and/or chopped glass fibres may be added at this stage.
6. MEK was added and the mixture is stirred until uniform
NB: The mixer should be a high speed dispersion mixer of appropriate size and power for the size of the batch being made.

In order to illustrate the fire, smoke and toxicity properties of the assemblies of the present invention an experimental study has been conducted.

The assembly used to generate the data below was made up of a Nomex honeycomb core of 48 Kg/m³, 3mm cell size, 3mm thick to which was applied a phenolic prepreg comprising a Hexply M41 resin matrix on 7781 style glass fibre reinforcement material having a resin content of 32%. This is referred to as the reference panel. A pigmented prepreg 120 glass fabric topcoat layer was then applied to the phenolic prepreg. By way of comparison, assemblies were also produced using an alternative decorative layer of Tedlar^{®} (for example, Tedlar^{®} decorative film TWH10BS3@ 42 gsm, unsupported with no adhesive).

The reference panels were assembled with 1 ply of M41 prepreg either side of the honeycomb core and a decorative layer as a top ply. Panels were cured using crush MOP method: load cold, heat up at 5°C/min, cure for 12 minutes at 160°C. Sufficient pressure was applied to crush the lay-up to 2 mm thickness by the use of spacers.

The decorative layers of pigmented prepreg or Tedlar^{®} have been co-cured directly on the phenolic sandwich panel without any adhesive. The curing cycle was crush MOP: load cold, 5°C/min, 12 minutes at 14C°C. Sufficient pressure was applied to crush the lay-up to 2 mm.

The heat release measurements for the assemblies with and without decorative layer were performed using an OSU (Ohio State University) chamber. Vertical burn tests at 60 seconds were performed using ATLAS, Horizontal/Vertical Flame Chamber. The smoke density and toxic gases data was generated using an NBS chamber.

The OSU, heat release values, for the sandwich panels are presented in table 1.

The FAA (Federal Aviation Authority) requirements for the total heat release / peak heat release is 65 / 65 kW/min/m² //kW/m² for finished interior panels. The OSU values for the assemblies with and without decorative layers are all low and comparable to the panels with standard Tedlar^{®} construction (see Table 1).

**Table 1. OSU results of HexPly^{®} M41 sandwich panels**

| **Panel** | **Peak Heat Release (kW/m²)** | **2 min Total Heat Release (kW min/m²)** |
|---|---|---|
| Reference Panel | 20.0 | 16.2 |
| Reference Panel + Pigmented Prepreg | 32.5 | 33.05 |
| Reference Panel + Tedlar^{®} | 24.3 | 29.0 |

The vertical burn data is presented in table 2. The acceptance limits for the parameters detailed in table 2 are as follows; average self extinguish time-5 seconds maximum; average burn length-101mm maximum; and average drip extinguishing time-1 second maximum.

**Table 2. Vertical Burn at 60 seconds for HexPly^{®} M41 panels**

| **Panel** | **Reference Panel** | **Reference Panel + Pigmented Prepreg** | **Reference Panel + Tedlar^{®}** |
|---|---|---|---|
| Average self extinguish time (sec) | 0 | 0 | 0 |
| Average burn length (mm) | 67 | 77 | 80 |
| Average drip extinguish time (sec) | 0 | 0 | 0 |

The vertical burn data indicates a small increase in the burn length for the sandwich panel with the pigmented prepreg as decorative layer in comparison with the reference panel, but have a similar value to a decorative layer based on Tedlar^{®}

The smoke and toxic data are presented in table 3 and 4. The acceptance limit for specific optical density is 20 maximum.

**Table 3. Smoke Density for HexPly^{®} M41 sandwich panels**

| **Panel** | **Smoke Density, Ds after 4mins in flaming mode** |
|---|---|
| Reference Panel | 7 |
| Reference Panel + Pigmented Prepeg | 5 |
| Reference Panel + Tedlar^{®} | 5 |

**Table 4. Toxic gases for HexPly^{®} M41 sandwich panels in flaming mode**

| **Panel** | **CO** | **HCN** | **HF** | **HCl** | **SO₂+H₂S** | **NOₓ** |
|---|---|---|---|---|---|---|
| Reference Panel | 50 | <2 | 7 | 10 | <1 | <1 |
| Reference Panel + Pigmented prepreg | 50 | <2 | 6 | 10 | <1 | <1 |
| Reference Panel + Tedlar | 40 | <2 | 5 | 8 | <1 | <1 |

The Tedlar^{®} film selected in this exercise was a co-curable layer for applications as galley areas or inside overhead bins. For other interior applications such as ceiling panels, interior wall panels, partition, galley structures, large cabinet walls the Tedlar^{®} layer is applied using adhesive. The adhesive used will impair the smoke density generating values >100 (measured at 4 mins).

The pigmented prepreg can replace Tedlar^{®} in all the applications without the need of an adhesive, preserving the low smoke density and heat release values.

It is of course to be understood that the invention is not intended to be restricted to the details of the above embodiment which is described by way of example only.

## Claims

1. A pigmented panel assembly comprising a core, at least one prepreg layer and at least one top coat layer, wherein the aforesaid prepreg layer is located between the core and the top coat layer and wherein the said top coat layer comprises at least one pigment and at least one thermoplastic resin binder, **characterised in that** said prepreg comprises a phenolic resin matrix, and said resin binder comprises polyvinyl butyral, the assembly being curable in a single curing process.

2. A pigmented panel assembly according to claim 1, wherein the core comprises any of the following either alone or in combination:- retardant foams, honeycomb and balsa.

3. A pigmented panel assembly according to claim 1, wherein the core is a honeycomb.

4. A pigmented panel assembly according to any preceding claim, wherein the assembly comprises at least two prepreg layers.

5. A pigmented panel assembly according to claim 4, wherein the at least two prepreg layers are applied to opposite sides of the core.

6. A pigmented panel assembly according to claim 4, wherein the at least two prepreg layer are provided between the core and the topcoat layer.

7. A pigmented panel assembly according to any preceding claim, wherein the prepreg comprises said phenolic resin matrix together with a reinforcement material.

8. A pigmented panel assembly according to claim 7, wherein the phenolic resin matrix comprises a phenolic resole, and/or a phenolic novolac.

9. A pigmented panel assembly according to claim 7, wherein the reinforcement material comprises synthetic or natural fibres.

10. A pigmented panel assembly according to claim 9, wherein the reinforcement material is of fabric construction.

11. A pigmented panel assembly according to any preceding claim, wherein the pigment comprises titanium dioxide.

12. A pigmented panel assembly according to any preceding claim, wherein the pigment constitutes from 10% to 40% by weight of the topcoat layer.

13. A pigmented panel assembly according to any preceding claim, wherein the resin binder constitutes form 40 to 70% by weight of the topcoat layer.

14. A method for the manufacture of a pigmented panel assembly comprising the steps of:- applying at least one prepreg layer to a core, applying at least one top coat layer to the aforesaid prepreg layer such that the said prepreg layer is located between the core and the top coat layer and wherein the said top coat layer comprises at least one pigment and at least one thermoplastic resin binder, **characterised in that** the prepreg comprises a phenolic resin matrix and said resin binder comprises polyvinyl butyral and the panel assembly is cured in a single curing process.

15. A method according to claim 14, wherein the curing process occurs at a temperature at or below 160°C.

16. A method according to claim 14 or claim 15, wherein the topcoat layer is applied by detaching the topcoat layer from a substrate.

17. A method according to claim 16, wherein the substrate is a textile, a random fibre mat, a thermoplastic film or a release paper.

## Patentansprüche

1. Pigmentiertes Plattensystem, das einen Kern, wenigstens eine Prepreg-Schicht und wenigstens eine Deckschicht umfasst, worin die vorgehend genannte Prepreg-Schicht sich zwischen dem Kern und der Deckschicht befindet und worin diese Deckschicht wenigstens ein Pigment und wenigstens ein thermoplastisches Harz-Bindemittel umfasst, **dadurch gekennzeichnet, dass** das Prepreg eine Phenolharzmatrix umfasst und das Harz-Bindemittel Polyvinylbutyral umfasst, wobei das Plattensystem in einem einzigen Aushärtungsprozess gehärtet werden kann.

2. Pigmentiertes Plattensystem gemäß Anspruch 1, worin der Kern jeden der folgenden Bestandteile, entweder allein oder in Kombination, umfasst: - Flammschutzmittel-Schäume, Wabenplatte und Balsaholz.

3. Pigmentiertes Plattensystem gemäß Anspruch 1, worin der Kern eine Wabenplatte ist.

4. Pigmentiertes Plattensystem gemäß einem der vorstehenden Ansprüche, worin das System wenigstens zwei Prepreg-Schichten umfasst.

5. Pigmentiertes Plattensystem gemäß Anspruch 4, worin die wenigstens zwei Prepreg-Schichten auf gegenüberliegenden Seiten des Kerns aufgebracht werden.

6. Pigmentiertes Plattensystem gemäß Anspruch 4, worin die wenigstens zwei Prepreg-Schichten zwischen dem Kern und der Deckschicht bereit gestellt werden.

7. Pigmentiertes Plattensystem gemäß einem der vorstehenden Ansprüche, worin das Prepreg die Phenolharzmatrix zusammen mit einem Verstärkungsmaterial umfasst.

8. Pigmentiertes Plattensystem gemäß Anspruch 7, worin die Phenolharzmatrix ein Phenolresol und/oder einen Phenol-Novolak umfasst.

9. Pigmentiertes Plattensystem gemäß Anspruch 7, worin das Verstärkungsmaterial synthetische oder Naturfasern umfasst.

10. Pigmentiertes Plattensystem gemäß Anspruch 9, worin das Verstärkungsmaterial ein Gewebe ist.

11. Pigmentiertes Plattensystem gemäß einem der vorstehenden Ansprüche, worin das Pigment Titandioxid umfasst.

12. Pigmentiertes Plattensystem gemäß einem der vorstehenden Ansprüche, worin die Deckschicht zu 10 Gewichts-% bis 40 Gewichts-% aus dem Pigment besteht.

13. Pigmentiertes Plattensystem gemäß einem der vorstehenden Ansprüche, worin die Deckschicht zu 40 Gewichts-% bis 70 Gewichts-% aus dem Harz-Bindemittel besteht.

14. Verfahren zur Herstellung eines pigmentierten Plattensystems, das folgende Schritte umfasst: Aufbringen von wenigstens einer Prepreg-Schicht auf einen Kern, Aufbringen von wenigstens einer Deckschicht auf diese Prepreg-Schicht, so dass diese Prepreg-Schicht sich zwischen dem Kern und der Deckschicht befindet, und worin diese Deckschicht wenigstens ein Pigment und wenigstens ein thermoplastisches Harz-Bindemittel umfasst, **dadurch gekennzeichnet, dass** das Prepreg eine Phenolharzmatrix umfasst und das Harz-Bindemittel Polyvinylbutyral umfasst und dass das Plattensystem in einem einzigen Aushärtungsprozess gehärtet wird.

15. Verfahren gemäß Anspruch 14, worin der Aushärtungsprozess bei einer Temperatur von 160°C oder darunter erfolgt.

16. Verfahren gemäß Anspruch 14 oder Anspruch 15, worin die Deckschicht durch Abziehen der Deckschicht von einem Substrat aufgetragen wird.

17. Verfahren gemäß Anspruch 16, worin das Substrat ein Textil, eine Wirrfasermatte, eine thermoplastische Folie oder ein Trennpapier ist.

## Revendications

1. Panneau pigmenté de type assemblage comprenant un noyau, au moins une couche de pré-imprégné et au moins une couche de revêtement supérieure, dans lequel ladite couche de pré-imprégné est située entre le noyau et la couche de revêtement supérieure et dans lequel ladite couche de revêtement supérieure comprend au moins un pigment et au moins un liant à base de résine thermoplastique, **caractérisé en ce que** ledit pré-imprégné comprend une matrice de résine phénolique, et ledit liant à base de résine comprend du polyvinyl butyral, l'ensemble étant durcissable en un seul processus de durcissement.

2. Panneau pigmenté de type assemblage selon la revendication 1, dans lequel le noyau comprend l'un quelconque parmi les suivants soit seul ou en combinaison : des mousses retardantes, une structure à nid d'abeilles et du balsa.

3. Panneau pigmenté de type assemblage selon la revendication 1, dans lequel le noyau est une structure à nid d'abeilles.

4. Panneau pigmenté de type assemblage selon l'une quelconque des revendications précédentes, dans lequel l'assemblage comprend au moins deux couches de préimprégné.

5. Panneau pigmenté de type assemblage selon la revendication 4, dans lequel les au moins deux couches de pré-imprégné son appliquées aux côtés opposés du noyau.

6. Panneau pigmenté de type assemblage selon la revendication 4, dans lequel les au moins deux couches de préimprégné sont placées entre le noyau et la couche de revêtement supérieure.

7. Panneau pigmenté de type assemblage selon l'une quelconque des revendications précédentes, dans lequel le pré-imprégné comprend ladite matrice de résine phénolique conjointement avec un matériau de renfort.

8. Panneau pigmenté de type assemblage selon la revendication 7, dans lequel la matrice de résine phénolique comprend un résol phénolique, et/ou une novolaque phénolique.

9. Panneau pigmenté de type assemblage selon la revendication 7, dans lequel le matériau de renfort comprend des fibres synthétiques ou naturelles.

10. Panneau pigmenté de type assemblage selon la revendication 9, dans lequel le matériau de renfort est une construction de tissu.

11. Panneau pigmenté de type assemblage selon l'une des revendications précédentes, dans lequel le pigment comprend du dioxyde de titane.

12. Panneau pigmenté de type assemblage selon l'une quelconque des revendications précédentes, dans lequel le pigment constitue de 10 % à 40 % en poids de la couche de revêtement supérieure.

13. Panneau pigmenté de type assemblage selon l'une quelconque des revendications précédentes, dans lequel le liant à base de résine constitue de 40 % à 70 % en poids de la couche de revêtement supérieure.

14. Procédé de fabrication d'un panneau pigmenté de type assemblage comprenant les étapes de : l'application d'au moins une couche de pré-imprégné à un noyau, l'application d'au moins une couche de revêtement supérieure à ladite couche de préimprégné de sorte que ladite couche de pré-imprégné soit située entre le noyau et la couche de revêtement supérieure et dans lequel ladite couche de revêtement supérieure comprend au moins un pigment et au moins un liant à base de résine thermoplastique, **caractérisé en ce que** le pré-imprégné comprend une matrice de résine phénolique et ledit liant à base de résine comprend du polyvinyl butyral et le panneau de type assemblage est durci en un seul processus de durcissement.

15. Procédé selon la revendication 14, dans lequel le processus de durcissement a lieu à une température égale ou inférieure à 160°C.

16. Procédé selon la revendication 14 ou la revendication 15, dans lequel la couche de revêtement supérieure est appliquée en détachant la couche de revêtement supérieure d'un substrat.

17. Procédé selon la revendication 16, dans lequel le substrat est un textile, un mat de fibres désordonnées, un film thermoplastique ou un papier de libération.
